# NEUE EUROPÄISCHE PATENTSCHRIFT

(11) **EP 2 543 232 B2**
(45) Veröffentlichungstag und Bekanntmachung des Hinweises auf die Entscheidung über den Einspruch: **11.06.2025**
(45) Hinweis auf die Patenterteilung: 27.07.2016
(21) Anmeldenummer: 11703659.0
(22) Anmeldetag: 08.02.2011
(51) Int. Cl.: H05B 6/12, H05B 6/06

(54) **KOCHFELD MIT ZUMINDEST EINER KOCHZONE SOWIE VERFAHREN ZUM BETREIBEN EINES KOCHFELDS**
COOK TOP HAVING AT LEAST ONE COOKING ZONE AND METHOD FOR OPERATING A COOK TOP
TABLE DE CUISSON COMPORTANT AU MOINS UNE ZONE DE CUISSON, AINSI QUE PROCÉDÉ DE FONCTIONNEMENT D'UNE TABLE DE CUISSON

(30) Priorität: 03.03.2010 ES 201030315
(43) Veröffentlichungstag der Anmeldung: 09.01.2013
(73) Patentinhaber: BSH Hausgeräte GmbH, 81739 München (DE)
(72) Erfinder: ARANDA VAZQUEZ, Sandra, 50015 Zaragoza (ES); GARDE ARANDA, Ignacio, 50012 Zaragoza (ES); GRACIA CAMPOS, Oscar, 50008 Zaragoza (ES); LLORENTE GIL, Sergio, 50009 Zaragoza (ES); LUCIA GIL, Oscar, 50006 Zaragoza (ES); MAIRAL SERRANO, Carlos Vicente, 50015 Zaragoza (ES); MILLAN SERRANO, Ignacio, 50018 Zaragoza (ES); MURESAN, Paul, 50720 La Cartuja (ES)
(86) Internationale Anmeldenummer: PCT/EP2011/051808
(87) Internationale Veröffentlichungsnummer: WO 2011/107325

(56) Entgegenhaltungen:
- EP-A1- 0 921 711
- EP-A1- 1 303 168
- EP-A1- 2 328 384
- EP-A2- 0 619 693
- WO-A1-2004/014106
- WO-A1-2006/092179
- WO-A1-2008/058614
- WO-A1-2008/058614
- WO-A1-2010/037675
- WO-A1-97/37515
- WO-A2-2010/084096
- DE-A1- 102004 003 126
- FR-A1- 2 863 039
- JP-A- 2009 094 028
- N/A: "HK683320XG Benutzerinformation für Induktions-Glaskeramikkochfeld", AEG, pages 1 - 19, XP055380604, [retrieved on 20170612]
- N/A: "HK683320XG Benutzerinformation für Induktions-Glaskeramikkochfeld", AEG, pages 1 - 19, XP055380627, [retrieved on 20170612]

## Beschreibung

Die Erfindung betrifft ein Verfahren zum Betreiben eines Kochfelds.

Aus dem Stand der Technik sind Kochfelder bekannt, welche mehrere Kochzonen aufweisen. Jede Kochzone für sich betrachtet wird durch einen Heizkörper geheizt, der unter einer Aufstellplatte des Kochfelds, auf der Zubereitungsgefäße aufgestellt werden können, angeordnet ist. In diesem Zusammenhang sind Kochfelder bekannt, bei denen eine Kochzone durch mehrere ineinander verlaufende Heizeinheiten, die beispielsweise als kreisförmige Heizwendeln oder Induktionsspulen ausgebildet sind, heizbar ist. Dadurch kann die Kochzone mit ineinander ausgebildeten und mit unterschiedlichem Radius ausgebildeten Heizelementen über eine individuelle Fläche beheizt werden.

Gerade im Hinblick auf eine individuelle Aktivierung und Deaktivierung derartiger separater Heizeinheiten ist die Erkennung einer Topfbelegung wesentlich. Dadurch kann erkannt werden, auf welcher Position und mit welcher Flächengröße ein Zubereitungsgefäß auf der Aufstellplatte aufgestellt ist.

Aus der EP 1 768 258 A2 ist eine Schaltungsanordnung zur Auswertung eines Sensorzustands bekannt, mittels welcher eine entsprechende Topfbelegung auf einem Kochfeld detektierbar ist.

Die bekannten Kochzonen eines Kochfelds sind im Hinblick auf ihre Größe eingeschränkt und darüber hinaus im Hinblick auf die Anordnung der Heizeinheiten sowie deren individueller Betriebsweise funktionell beschränkt.

Aus der WO 2006/092179 A1 ist eine Heizeinrichtung für ein Induktionsgargerät bekannt. Diese umfasst eine Schaltungsanordnung mit mehreren Induktoren, die unterschiedlich miteinander verschaltet werden können. Die Heizeinrichtung umfasst dazu zumindest einen ersten Schwingkreis, der mindestens einen ersten und einen zweiten Induktor zur Übertragung von Heizenergie auf ein zu erwärmendes Element und eine erste Schaltung zur Anregung des ersten Schwingkreises und zur Zuführung der Heizenergie zu den Induktoren umfasst. Des Weiteren weist die Heizeinrichtung ein Schaltmittel auf, durch das die Heizenergie wahlweise nur einem der Induktoren oder gleichzeitig beiden Induktoren in Parallelschaltung zuführbar ist. Ferner offenbart die WO 2008/056614 A1 eine induktive Kochzone, ein Induktionskochfeld sowie ein Ansteuerverfahren. Schließlich offenbart die FR 2 863 039 A1 ein Heizverfahren für ein Gefäß, welches auf einem Kochfeld mit Induktoren als Heizmitteln angeordnet ist.

Es ist Aufgabe der vorliegenden Erfindung, ein Verfahren zum Betreiben eines Induktionskochfelds zu schaffen, mittels welchem eine großflachig ausgebildete Kochzone energieeffizient betrieben werden kann und in verbesserter Weise eine Topfbelegung durchgeführt werden kann.

Diese Aufgabe wird durch ein Verfahren, welches die Merkmale nach Anspruch 1 aufweist, gelöst.

Bei einem erfindungsgemäßen Verfahren zum Betreiben einer Kochzone eines Kochfelds, bei welchem die Kochzone aus zumindest zwei Teilkochzonen gebildet wird, und jede Teilkochzone über zumindest eine Heinzeinheit heizbar ist, werden die Heizeinheiten überlappungsfrei nebeneinander angeordnet, derart, dass bei gemeinsamem Betrieb der Teilkochzonen eine zusammenhängende beheizbare Fläche ausgebildet wird. In dem ersten Betriebsmodus, in dem die Teilkochzonen als gemeinsame Kochzone betreibbar sind, kann eine Belegungserkennung einer Teilkochzone mit zumindest einem Zubereitungsgefäß durchgeführt werden. In dem ersten Betriebsmodus werden dann auch alle aktivierten und mit einem Zubereitungsgefäß belegten Teilkochzonen nur mit der jeweils gleichen elektrischen Leistung gespeist. Es wird also in diesem ganz spezifischen Betriebsmodus des Kochfelds allen belegten Teilkochzonen die gleiche elektrische Leistung zugeführt.

Da vorzugsweise Induktionskochfelder mit der Erfindung umfasst sind, werden die Heizeinheiten, die Induktoren umfassen, so betrieben, dass die Induktoren der jeweiligen Teilkochzonen mit der gleichen Frequenz angeregt werden, so dass sie die gleiche elektrische Leistung abgeben.

Im Hinblick auf das Heizen einer Teilkochzone wird bei einem Induktionskochfeld darauf verwiesen, dass in elektromagnetischer Wechselwirkung zwischen der Spule eines Induktors und dem Material eines Zubereitungsgefäßes, welches auf einer Kochfeldplatte aufgestellt ist, eine entsprechende Erwärmung des Zubereitungsgefäßes und somit auch des darin eingebrachten Lebensmittels erfolgt. Eine explizite Erwärmung der Kochfeldplatte, wie dies bei Strahlungsheizkörpern der Fall ist, erfolgt bei Induktionskochfeldern nicht. Bei einem Induktionskochfeld ist daher durch die Formulierung betreffend der Aufheizung einer Teilkochzone mit einer Heizeinheit die Erwärmung des auf der Teilkochzone aufgestellten Zubereitungsgefäßes in induktiver Weise zu verstehen.

Erfindungsgemäß werden Teilkochzonen in einem zweiten Betriebsmodus des Kochfelds unabhängig voneinander als jeweils eigene Kochzone betrieben.

Erfindungsgemäß wird mit der Wahl des ersten Betriebsmodus eine erste Belegungserkennungsphase automatisch gestartet und nur die Teilkochzone, auf der ein Zubereitungsgefäß detektiert wird, wird geheizt. Dies gewährleistet einen besonders energiesparenden Betrieb.

Vorzugsweise ist vorgesehen, dass nach dem Ablauf der ersten Belegungserkennungsphase das Durchführen einer nachfolgenden weiteren Belegungserkennungsphase nur nutzerdefiniert gestartet werden kann. Gerade bei bereits begonnenen Zubereitungsvorgängen, bei denen das Kochfeld bereits längere Zeit eingeschaltet ist, kann dadurch verhindert werden, dass aufgrund von Unachtsamkeit des Nutzers unerwünschter Weise Teilkochzonen aktiviert werden, auf denen kein oder ein nicht zur Erwärmung vorgesehenes Teil aufliegt Gerade dann, wenn bereits ein Zubereitungsvorgang durchgeführt wird, ist ein Nutzer meist darauf fokussiert und konzentriert und gegebenenfalls abgelenkt, so dass er auch Gegenstände wie eine Gabel oder sonstiges Besteck auf das Kochfeld auflegt. Würde dann eine automatische Belegungserkennung durchgeführt und eine derartige Belegung erkannt werden, würde eine Aufheizung dieses Bestecks durchgeführt, was selbstverständlich unerwünscht ist. Dies kann durch die oben genannte vorteilhafte Ausführung vermieden werden.

Vorzugsweise wird nach dem Ende einer Belegungserkennungsphase ein Aufstellen eines weiteren Zubereitungsgefäßes auf der Kochzone im ersten Betriebsmodus nicht erkannt und die Teilkochzone, auf der das weitere Zubereitungsgefäß aufgestellt wird, bleibt unbeheizt. Auch dadurch kann den entsprechenden Sicherheitsaspekten genüge getan werden und ein unerwünschtes Aufheizen vermieden werden Darüber hinaus wird auch hier Energie gespart, wenn vom Nutzer lediglich vorgesehen ist, dass er das Zubereitungsgefäß nur zum Abstellen auf dem Kochfeld platzieren möchte, ohne es gleich unverzuglich aufzuheizen.

Vorzugsweise wird während einer Belegungserkennungsphase das Abnehmen und Aufstellen von einem oder mehreren Zubereitungsgefäßen auf den Teilkochzonen der Kochzone erkannt und die Teilkochzone, auf denen eine Belegung erkannt wird, werden beheizt Es können also in diesem Zeitraum, während eine Belegungserkennung abläuft, sowohl Zubereitungsgefäße zusätzlich aufgestellt oder abgenommen werden, die dann auch im Rahmen der Belegungsprüfung detektiert werden.

Vorzugsweise dauert eine Belegungserkennungsphase weniger als 10 Sekunden und beträgt insbesondere etwa 5 Sekunden. Dies ist ein Zeitrahmen der eine sichere und präzise Belegungserkennungsprüfung ermöglicht, und andererseits jedoch nicht zu lange dauert, um die weiteren Handlungen eines Nutzers zum Starten des Zubereitungsvorgangs oder das Fortführen eines Zubereitungsvorgangs unnötig zu verzogern. Vielmehr ist genau diese Zeitdauer an die übliche nutzerspezifische Vorgehensweise und einen entsprechenden Handlungsablauf eines Nutzers angepasst. Dadurch wird der Nutzer beim Betrieb des Kochfelds weder gedrängt noch in seiner weiteren Vorgehensweise nach Handlungen aufgehalten.

Eine sehr nutzerfreundliche Vorgehensweise wird dadurch geschaffen. Vorzugsweise werden zumindest in der ersten Belegungserkennungsphase, insbesondere in allen Belegungserkennungsphasen, alle Teilkochzonen im Hinblick auf eine Belegung uberprüft.

Es kann auch vorgesehen sein, dass in einer nachfolgenden zweiten Belegungserkennungsphase nur die Teilkochzonen, die bei der ersten Belegungserkennungsphase nicht belegt waren, auf eine Belegung hin überprüft werden.

Vorzugsweise wird vorgesehen, dass im ersten Betriebsmodus ein Verschieben eines während einer Belegungserkennungsphase auf der Kochzone detektierten Zubereitungsgefäßes auch nach Ablauf einer Belegungserkennungsphase erkannt und dann die Teilkochzonen beheizt werden, auf welche das Zubereitungsgefäß verschoben wird. Insbesondere werden dann diejenigen Teilkochzonen, auf denen das Zubereitungsgefäß vorher stand, und die jetzt nicht mehr belegt sind, automatisch abgeschaltet. Für dieses Abschalten kann eine gewisse Nachlaufzeit definiert werden, so dass gegebenenfalls auf dem nunmehr freiwerdenden Platz auf einer oder mehreren Teilkochzonen, auf denen das Zubereitungsgefäß vorher stand und dann nach dem Verschieben nicht mehr steht, diese Teilkochzone durch Aufstellen eines weiteren Zubereitungsgefäßes weiter betrieben wird.

Vorzugsweise kann eine derartige Nachlaufzeitdauer einige Sekunden, insbesondere weniger als zehn Sekunden, vorzugsweise etwa fünf Sekunden dauern.

Besonders vorteilhaft ist es, wenn der erste Betriebsmodus nur nutzerdefiniert gestartet wird. Es muss daher der Nutzer ganz bewusst diesen Betriebsmodus wünschen und ihn dann selbst aktivieren. Dadurch können unerwunschte Betriebseinstellungen vermieden werden und ein energieeffizienter Betrieb gewährleistet werden.

Es kann auch vorgesehen sein, dass der erste Betriebsmodus beim Einschalten des Kochfelds automatisch gestartet wird. Insbesondere wird vorgesehen, dass eine erste Teilkochzone durch zumindest zwei nebeneinander angeordnete Heizeinheiten geheizt werden kann und die zwei Heizeinheiten mit einer ersten Treiberschaltung mit elektrischer Energie versorgt werden können. Eine zweite Teilkochzone wird durch zumindest eine neben den zwei Heizeinheiten der ersten Teilkochzone angeordnete dritte Heizeinheit geheizt und zumindest die dritte Heizeinheit wird mit einer separaten zweiten Treiberschaltung mit Energie versorgt. Vorzugsweise weist auch die zweite Teilkochzone zumindest zwei Heizeinheiten auf, die durch die zweite Treiberschaltung mit Energie versorgt werden können. Bei einer derartigen Ausgestaltung weist somit jede Teilkochzone zumindest zwei Unterzonen auf, wobei eine Unterzone durch eine zugeordnete Heizeinheit heizbar ist.

Vorzugsweise kann in einem zweiten Betriebsmodus des Kochfelds vorgesehen sein, dass die Teilkochzonen unabhängig voneinander als jeweils eigene Kochzone betrieben werden. In diesem zweiten Betriebsmodus kann somit die erste Teilkochzone unabhängig von der zweiten Teilkochzone ein- und ausgeschaltet werden. Die einzelnen Teilkochzonen können in diesem zweiten Betriebsmodus dann auch mit unterschiedlichen Leistungen gespeist werden. Sie können in diesem zweiten Betnebsmodus auch unabhangig durch einen Nutzer separat ein- und ausgeschaltet werden.

Im Hinblick auf die Formulierung einer Heizbarkeit einer Kochzone mit einem Induktor ist darauf verwiesen, dass hiermit umfasst ist, dass durch die elektromagnetische Wechselwirkung einer Spule des Induktors mit einem geeigneten metallischen Material eines Zubereitungsgefäßes eine entsprechende Erwarmung des Zubereitungsgefäßes erzeugt wird. Genau diese spezifische physikalische Grundlage wird im Kontext der Erfindung durch die Formulierung der Heizbarkeit einer Kochzone bzw. einer Fläche davon oder einer Teilkochzone mit einem Induktor auch darunter verstanden.

Darüber hinaus wird mit der Formulierung einer Nebeneinanderanordnung der Induktoren eine derartige Positionierung verstanden, bei der die Induktoren Seite an Seite zueinander positioniert werden. Es soll also eine Anordnung darunter verstanden werden, bei der die durch die Induktoren auf der darüber angeordneten Kochfeldplatte gebildeten Flächen nebeneinander angeordnet sind und sich nicht teilweise überlappen oder sogar eine Fläche vollstandig von der anderen aufgenommen ist. Dies wäre der Fall bei mit unterschiedlichem Radius ausgebildeten Induktoren, die radial ineinander angeordnet sind, was hier nicht umfasst sein soll.

Die Ausgestaltung eines Kochfelds, insbesondere eines Induktionskochfelds, ist dahingehend konzipiert, dass das Kochfeld zumindest eine Kochzone aufweist, welche aus zumindest zwei Teilkochzonen aufgebaut ist. Jede Teilkochzone ist durch zumindest eine Heizeinheit heizbar, wobei die Heizeinheiten nur überlappungsfrei nebeneinander angeordnet sind, derart, dass bei einem gemeinsamen Betrieb der Teilkochzonen eine zusammenhängende beheizte Fläche ausgebildet ist. Das Kochfeld weist eine Steuereinheit auf, mittels welcher die Teilkochzonen in einem ersten Betnebsmodus als eine einzige Kochzone betreibbar sind. Das Kochfeld umfasst darüber hinaus eine Vorrichtung zur Belegungserkennung der Teilkochzone mit zumindest einem Zubereitungsgefäß, wobei in dem ersten Betriebsmodus eine Belegungserkennung einer Teilkochzone durchführbar ist. Die Heizeinheiten, deren zugeordnete Teilkochzonen mit einem Zubereitungsgefäß belegt sind, sind in diesem ersten Betriebsmodus nur mit der jeweils gleichen elektrischen Leistung speisbar.

Im Hinblick auf ein Induktionskochfeld, bei welchem eine Heizeinheit einen Induktor umfasst, bedeutet dies, dass alle Induktoren mit der gleichen Frequenz angeregt werden und somit die gleiche Leistung abgeben. Dies bedeutet allerdings nicht zwangsweise, dass auch die gleiche Leistung umgesetzt in Wärme bei dem Lebensmittel in einem Zubereitungsgefäß ankommt. Dies deswegen, da aufgrund der Materialen und Ausgestaltungen von Zubereitungsgefäßen die eingespeiste Leistung nicht bei allen Zubereitungsgefäßen gleich anteilig in Wärme umgesetzt wird. Durch eine Ausgestaltung, bei der in diesem ersten Betriebsmodus alle aktivierten Teilkochzonen mit der gleichen elektrischen Leistung gespeist werden, kann eine möglichst gleichmäßige Beheizung eines einzigen Zubereitungsgefäßes auf den Teilkochzonen erreicht werden.

Ein bevorzugtes Induktionskochfeld umfasst eine Schaltungsanordnung zum Betreiben einer Kochzone des Induktionskochfelds. Die Schaltungsanordnung umfasst eine Parallelschaltung, in welcher zwei Induktoren parallel geschaltet sind. In Reihe zu der Parallelschaltung ist ein Strommesselement geschaltet. Das Induktionskochfeld umfasst darüber hinaus eine Vorrichtung zur Belegungserkennung zumindest einer Teilkochzone der gesamten Kochzone mit einem Zubereitungsgefäß. Diese Vorrichtung zur Belegungserkennung umfasst das Strommesselement. Durch eine derartige Ausgestaltung des Induktionskochfelds kann zum einen ein energieeffizienterer Betrieb ermoglicht werden. Insbesondere wird durch eine derartige Ausgestaltung ein bauteilreduziertes und vereinfachtes Schaltungskonzept ermöglicht, da für eine Mehrzahl von Induktoren lediglich ein einziges Strommesselement erforderlich ist, um eine Belegung der Teilkochzonen, die mit dem jeweiligen Induktoren heizbar sind, erkennen zu konnen Dadurch wird auch eine ganz spezifische Vorgehensweise bei der Topfbelegungserkennung ermöglicht.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen naher erlautert. Es zeigen:
- Fig 1: eine schematische Draufsichtdarstellung auf ein Ausführungsbeispiel eines Kochfelds; und
- Fig. 2: eine schematische vereinfachte Darstellung eines Schaltungsprinzips des Kochfelds gemäß Fig. 1.

In den Figuren werden gleiche oder funktionsgleiche Elemente mit den gleichen Bezugszeichen versehen.

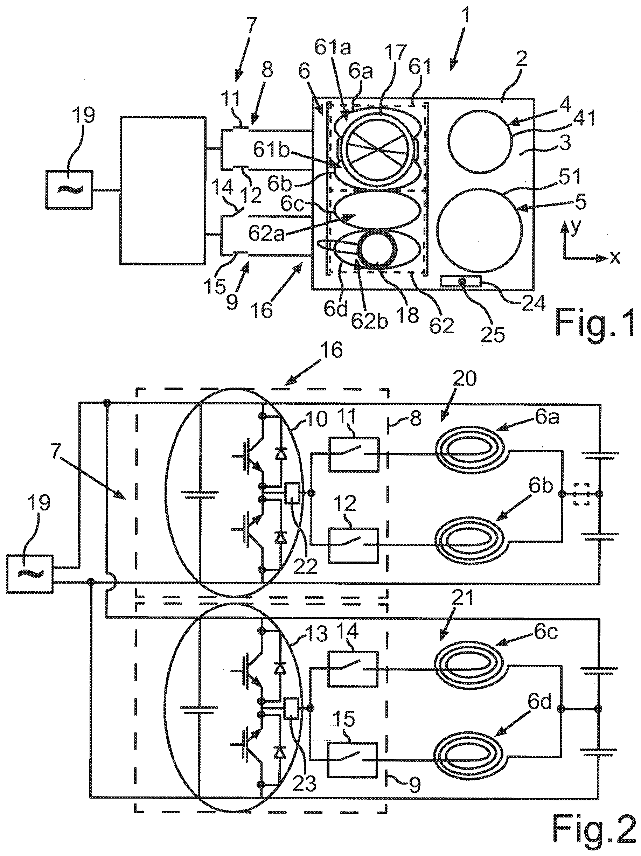

In Fig. 1 ist in einer schematischen Darstellung eine Draufsicht auf ein Kochfeld 1 gezeigt, welches eine Aufstellplatte 2 aufweist, die aus Glas oder Glaskeramik ausgebildet sein kann. Auf einer Oberseite 3 der Aufstellplatte 2 können Zubereitungsgefäße, wie Pfannen, Töpfe oder dergleichen aufgestellt werden. Das Kochfeld 1 umfasst im Ausführungsbeispiel drei Kochzonen 4, 5 und 6, welche im Hinblick auf ihre Flächenausmaße und ihre Flächenform unterschiedlich sind. So sind die Kochzonen 4 und 5 kreisförmig ausgebildet und weisen unterschiedliche Radien auf. Mittels den Konturen 41 und 51 der Kochzonen 4 und 5 ist deren maximale Flächengröße kenntlich gemacht, wobei damit für einen Nutzer erkennbar ist, wo sich unterhalb der Abstellplatte 2 in diesen Positionen für die Kochzonen 4 und 5 ein Heizkörper befindet.

Das Kochfeld 1 ist im Ausführungsbeispiel als Induktionskochfeld ausgebildet, sodass unter den Kochzonen 4 und 5 jeweils zumindest ein Induktor ausgebildet ist. Im Ausführungsbeispiel ist vorgesehen, dass jeder dieser Induktoren eine einzige Spule aufweist, die entsprechend kreisförmig gewickelt ist, sodass bei Aktivieren der Induktionsspule im wesentlichen die gesamte Fläche der Kochzone 4, die durch die Kontur 41 begrenzt ist, heizbar ist, und im Hinblick auf die Kochzone 5 die durch die Kontur 51 begrenzt ist, diese ebenfalls durch eine Induktionsspule heizbar ist. Wie in der Darstellung gemäß Fig. 1 zu erkennen ist, sind die Kochzonen 4 und 5 beabstandet zueinander angeordnet, wobei sie darüber hinaus auch beabstandet zur Kochzone 6 angeordnet sind.

Es kann auch vorgesehen sein, dass zumindest einer der Kochzonen 4 und 5 mehrere Induktionsspulen umfassen, die separat aktivierbar und deaktivierbar sind und als ineinander angeordnete Kreise ausgebildet sind, sodass diese unabhängigen Induktionsspulen unterschiedliche Radien aufweisen. Dadurch kann eine Kochzone 4 und 5 auch in radial kleineren und größeren Flächenbereichen beheizt werden.

Darüber hinaus ist die Kochzone 6 als besonders große Kochzonenfläche ausgebildet, welche darüber hinaus auch im Hinblick auf ihre Formgebung rechteckig ausgebildet ist. In der gezeigten Ausführung umfasst die Kochzone 6 vier unter der Aufstellplatte 2 angeordnete Induktoren, von denen jeder Induktor eine einzige Induktionsspule aufweist. Im Hinblick auf die Formgebung sind diese nebeneinander angeordnet und weisen eine ovale Formgebung auf, wie dies in Fig. 1 gezeigt ist. Die Induktoren grenzen so aneinander an, dass die beheizbare Fläche nahezu vollständig geheizt werden kann. Durch die ovale Formgebung der gewickelten Induktionsspulen der einzelnen als Heizeinheiten ausgebildeten Induktoren 6a, 6b, 6c und 6d ist eine besonders gleichmäßige Flächenaufheizung ermöglicht. Wie zu erkennen ist, sind diese Induktoren 6a bis 6d mit ihren Induktionsspulen nicht ineinander kaskadenartig angeordnet, sondern nebeneinander und weisen alle die gleichen geometrischen Ausmaße auf.

Darüber hinaus umfasst das Kochfeld 1 eine Vorrichtung 16 zur Erkennung eines Zubereitungsgefäßes auf den Kochzonen 4, 5 und 6. Insbesondere ist dies im Hinblick auf die Erkennung eines Zubereitungsgefäßes auf der Kochzone 6 zu sehen, welche flächenmäßig sehr groß und größer als die Flächen der Kochzone 4 und 5 zusammen ist.

Insbesondere erstreckt sich die Fläche der Kochzone 6 im Wesentlichen über zumindest 80 %, vorzugsweise zumindest 90 % der Tiefe des Kochfelds 1 und somit auch der Aufstellplatte 2, was eine Erstreckung in y-Richtung bedeutet. Darüber hinaus weist die Kochzone 6 eine Fläche in der Breite (x-Richtung) auf, welche im Ausführungsbeispiel zumindest 30 %, vorzugsweise 40 % der gesamten Breitenerstreckung der Aufstellplatte 2 umfasst.

Die Vorrichtung 16 umfasst vorzugsweise mehrere Sensoren, welche kapazitiv oder induktiv arbeitend ausgebildet sind, sodass die Belegung zuverlässig erkannt werden kann.

Das Kochfeld 1 umfasst darüber hinaus eine Schaltungsanordnung 7, welche zur Energieversorgung der einzelnen Heizeinheiten der Kochzonen 4 bis 6 ausgebildet sind, und die Induktoren 6a bis 6d umfasst. Die Schaltungsanordnung umfasst in diesem Zusammenhang eine erste Treiberschaltung 8 und eine dazu separate zweite Treiberschaltung 9. Die erste Treiberschaltung 8 ist zur Energieversorgung der beiden ersten Heizeinheiten bzw. Induktoren 6a und 6b ausgebildet. Darüber hinaus ist die zweite Treiberschaltung 9 zur Energieversorgung der beiden weiteren Heizeinheiten bzw. Induktoren 6c und 6d ausgebildet. Die beiden Treiberschaltungen 8 und 9 sind unabhängig voneinander betreibbar.

Darüber hinaus umfasst das Kochfeld 1 eine Steuereinheit, welche der Schaltungsanordnung 7 komponentenspezifisch und funktionell zugeordnet ist. Mittels der Steuereinheit werden die einzelnen Induktoren 6a bis 6d individuell gesteuert und entsprechend aktiviert und deaktiviert und die Signale der Vorrichtung 16 können mit dieser Steuereinheit entsprechend verarbeitet werden.

Im Hinblick auf den spezifischen Aufbau der Schaltungsanordnung 7 wird auf das vereinfachte Schaltbild in Fig. 2 verwiesen. Über ein Stromversorgungsnetz 19 wird Wechselspannung für die Schaltungsanordnung 7 bereitgestellt. Die erste Treiberschaltung 8 umfasst eine erste Halbbrückenschaltung 10, die in Reihe zu einer Parallelschaltung 20 geschaltet ist. Die Parallelschaltung 20 umfasst einen ersten Schaltungszweig, in dem ein erstes Relais 11 in Reihe zu der Induktionsspule des Induktors 6a und somit der ersten Heizeinheit geschaltet ist. Im dazu parallelen zweiten Schaltungszweig ist ebenfalls ein Relais 12 geschaltet, welches in Reihe zu der Induktionsspule des zweiten Induktors 6b bzw. der zweiten Heizeinheit geschaltet ist.

Darüber hinaus ist die zweite Treiberschaltung 9 analog zur ersten Treiberschaltung 8 aufgebaut und umfasst ebenfalls eine Halbbrückenschaltung 13, die in Reihe zu einer Parallelschaltung geschaltet ist. Diese Parallelschaltung umfasst auch hier einen ersten Schaltungszweig in dem ein Relais 14 in Reihe zu einer Induktionsspule des dritten Induktors 6c bzw. der dritten Heizeinheit geschaltet ist. In einem zweiten Schaltungszweig ist ein weiteres Relais 15 in Reihe zu einer Induktionsspule des vierten Induktors 6d bzw. der vierten Heizeinheit geschaltet. Diese Unterzonen 61a und 61b stellen im Wesentlichen flächenmäßig die Größe der ovalen Ausgestaltungen der darunter angeordneten Induktionsspulen dar, welche durch die entsprechenden Konturen auf der Oberseite 3 der Aufstellplatte 2 gekennzeichnet sind.

Darüber hinaus ist die zweite Treiberschaltung 9 analog zur ersten Treiberschaltung 8 aufgebaut und umfasst ebenfalls eine Halbbrückenschaltung 13, die in Reihe zu einer Parallelschaltung 21 geschaltet ist. Diese Parallelschaltung 21 umfasst auch hier einen ersten Schaltungszweig in dem ein Relais 14 in Reihe zu einer Induktionsspule des dritten Induktors 6c bzw. der dritten Heizeinheit geschaltet ist. In einem zweiten Schaltungszweig ist ein weiteres Relais 15 in Reihe zu einer Induktionsspule des vierten Induktors 6d bzw. der vierten Heizeinheit geschaltet.

In Reihe zu der Parallelschaltung 20 ist ein Strommesselement 22 geschaltet. Es ist somit ein Schaltungskonzept realisiert, bei dem bei der ersten Treiberschaltung 8 lediglich ein derartiges Strommesselement 22 vorhanden ist, welches nicht in der Parallelschaltung 20 selbst sondern in Reihe zu der Parallelschaltung 20 geschaltet ist. Eine sehr bauteilreduzierte Ausgestaltung kann dadurch geschaffen werden. Das Strommesselement 22 ist komponentenspezifisch auch der Vorrichtung 16 zur Topfdetektion bzw. zur Belegungserkennung der Kochzone zugeordnet. In analoger Weise weist die zweite Treiberschaltung 9 ebenfalls ein Strommesselement 23 auf, welches in Reihe zu der Parallelschaltung 21 geschaltet ist.

Im Ausführungsbeispiel sind die Strommesselemente 22 und 23 der separaten Treiberschaltungen 8 und 9 zwischen den Halbbrückenschaltungen 10 bzw. 13 und den Parallelschaltungen 20 bzw. 21 geschaltet.

Wie in der Darstellung gemäß Fig. 2 angedeutet, könnte das Strommesselement 22 auch nach der Parallelschaltung 20 in Reihe zu der Parallelschaltung 20 geschaltet sein, wie das gestrichelte Kästchen symbolisiert. Analog könnte die Verschaltung des Strommesselements 23 nach der Parallelschaltung 21 und in Reihe dazu vorgesehen sein.

Gemäß der Darstellung in Fig. 1 umfasst im Ausführungsbeispiel das Induktionskochfeld 1 auch eine Bedieneinrichtung 24, welche auf der Kochfeldplatte bzw. Aufstellplatte 2 ausgebildet ist.

Diese Bedieneinrichtung 24 kann zumindest teilweise berührsensitiv ausgebildet sein. Sie kann mehrere Bedienelemente aufweisen und darüber hinaus auch eine Anzeigeeinheit umfassen. Insbesondere weist die Bedieneinrichtung 24 ein Bedienelement 25 auf, welches ebenfalls berührsensitiv ausgebildet sein kann. Mit diesem Bedienelement 25 kann eine nutzerdefinierte Aktivierung einer Belegungserkennungsprüfung der gesamten Kochzone 6 durchgeführt werden.

Wie bereits eingangs erläutert, ist die großflächige Kochzone 6 aus mehreren Teilkochzonen gebildet. Im Ausführungsbeispiel sind dazu zwei Teilkochzonen 61 und 62 vorgesehen, deren entsprechende Zonenflächen gekennzeichnet sind. Diese sind zusammenhängend und unmittelbar aneinander angrenzend ausgebildet. Jede dieser Teilkochzonen 61 und 62 weist im Ausführungsbeispiel zwei Unterzonen 61 a und 61 b sowie 62a und 62b auf. Die Flächen der Unterzonen sind quasi durch die mittels den oval gewickelten Spulen der Induktoren 6a bis 6d bzw. deren Größe größenmäßig definiert.

Im Hinblick auf die unmittelbare nebeneinander Anordnung der Teilkochzonen 61 und 62 sowie der Unterzonen 61 a, 61 b, 62a und 62b ist dies gemäß der Darstellung dahingehend zu versehen, dass die durch die jeweiligen Konturen begrenzten Flächen überlappungsfrei zueinander angeordnet sind.

Das Induktionskochfeld 1 ist so ausgebildet, dass zumindest die Kochzone 6 in zwei unterschiedlichen Betriebsmodi betrieben werden kann. So ist in einem ersten Betriebsmodus vorgesehen, dass die beiden Teilkochzonen 61 und 62, die die gesamte Kochzone 6 bilden, gemeinsam betrieben werden und somit die gesamte Kochfläche der Kochzone 6 bilden. In diesem ersten Betriebsmodus ist insbesondere vorgesehen, dass alle Teilkochzonen 61 und 62 und insbesondere auch die Unterzonen 61 a, 61 b, 62a und 62b mit der gleichen elektrischen Leistung gespeist sind. Dies betrifft im Betrieb die mit einem Zubereitungsgefäß 17 bzw. 18 belegten Teilkochzonen 61 und 62 bzw. die gebildeten Unterzonen 61 a, 61 b, 62a und 62b. Es ist also vorgesehen, dass die den Unterzonen 61 a, 61 b, 62a und 62b jeweils örtlich und funktionell zugeordneten Induktoren 6a bis 6d nur mit der gleichen Leistung gespeist werden können, wenn dieser erste Betriebsmodus aktiviert ist. Das bedeutet, dass diejenigen Induktoren 6a bis 6d, deren zugeordnete Unterzonen 61 a, 61 b, 62a und 62b bzw. die entsprechenden Teilkochzonen 61 und 62 auf der Aufstellplatte 2, die mit einem Zubereitungsgefäß 17 oder 18 belegt sind, nur mit der gleichen elektrischen Leistung gespeist werden können.

In diesem ersten Betriebsmodus wird mittels der Vorrichtung 16 eine Belegungskennungsprüfung durchgeführt, wie dies im Späteren erläutert wird. Im Ausführungsbeispiel ist vorgesehen, dass bei einem Aktivieren des Kochfelds 1 und einem nutzerdefinierten oder automatisch gestarteten ersten Betriebsmodus der Kochzone 6 eine erste Belegungserkennungsprüfung automatisch durchgeführt wird. Wird dann an spezifischen Stellen ein Zubereitungsgefäß 17 oder 18 detektiert, werden die entsprechend über die Unterzonen 61 a, 61 b, 62a, und 62b belegten Induktoren 6a bis 6d aktiviert. Wird dann im Weiteren eine weitere Belegungsprüfung erforderlich oder soll durchgeführt werden, so kann dies nur nutzerdefiniert gestartet werden. Dazu muss der Nutzer das Bedienelement 25 betätigen. Eine automatische zweite Belegungserkennungsprüfung und somit ein Starten einer zweiten Belegungserkennungsphase automatisch ist daher nicht möglich.

Die Kochzone 6 ist darüber hinaus in ihrem zweiten Betriebsmodus betreibbar, indem die Teilkochzonen 61 und 62 unabhängig voneinander ein- und ausgeschaltet werden können. In diesem zweiten Betriebsmodus können die Teilkochzonen 61 und 62 unabhängig voneinander auch mit unterschiedlichen Leistungen betrieben werden. In diesem zweiten Betriebsmodus existiert quasi eine gesamte Kochzone 6 nicht und die Teilkochzonen 61 und 62 sind als separate eigenständige Kochzonen analog zu den weiteren Kochzonen 4 und 5 zu sehen.

Im Hinblick auf die Vorgehensweise bei einem Betrieb des Kochfelds 1 und insbesondere der großflächigen Kochzone 6 in dem genannten ersten Betriebsmodus wird verfahrensspezifisch im Hinblick auf die Belegungserkennung ein mehrstufiges Suchverfahren durchgeführt. Dazu wird in einem ersten Schritt überprüft, ob überhaupt ein Zubereitungsgefäß auf der gesamten Kochzone 6 angeordnet ist, wobei bei diesem ersten Suchschritt lediglich übergeordnet und nicht örtlich spezifisch nach einer Belegung gesucht wird.

Die Teilkochzonen 61 und 62 mit ihren entsprechend gezeigten Zonenflächen werden im Hinblick auf die Anzahl und ihre Größe vorzugsweise abhängig von der Anzahl der Treiberschaltungen 8 und 9 gebildet. Im Ausführungsbeispiel wird somit die erste Teilkochzone 61 dahingehend gebildet, dass sie in etwa die Hälfte der gesamten Kochzonenfläche der Kochzone 6 darstellt und insbesondere die Flächen der Bereiche der Kochzone 6 umfasst, die mit den beiden ersten Induktoren 6a und 6b beheizt werden können. In analoger Weise ist die zweite Teilkochzone 62 dahingehend gebildet, dass sie die Fläche der Kochzone 6 umfasst, durch die die weiteren Induktoren 6c und 6d beheizt werden können.

Gemäß dem ersten Suchschritt wird somit zunächst in einer allgemeinen und übergeordneten Suchstrategie eine generelle Belegung der Kochzone 6 geprüft. Im Hinblick auf diese Detektion werden durch die Vorrichtung 16 niedervoltige Messsignale erzeugt, die eine Oszillation in einen der von den Induktoren 6a bis 6d und den eingezeichneten Kondensatoren gebildeten Serienschwingkreise erzeugen. Bei diesem ersten Suchschritt sind alle Schaltelemente in Form der Relais 11 bis 15 geschlossen. Durch die Strommesselemente 22 und 23 werden dann entsprechend auftretende Stromwerte detektiert, wobei abhängig von den Stromwerten erkannt werden kann, ob sich auf der Kochzone 6 irgendwo zumindest ein Zubereitungsgefäß befindet.

Wird in diesem ersten Schritt festgestellt, dass sich zumindest ein Zubereitungsgefäß auf der Kochzone 6 befindet, so wird in einem weiteren nachfolgenden Suchschritt eine örtlich präzise Suche, wo sich das Zubereitungsgefäß genau befindet, durchgeführt.

Aufgrund des in Fig. 2 gezeigten Schaltungskonzepts, bei dem lediglich jeweils nur ein Strommesselement 22 bzw. 23 einer der Treiberschaltungen 8 und 9 zugeordnet ist und diese in spezifischer Weise in Reihe zu den Parallelschaltungen 20 bzw. 21 geschaltet sind, ist diesbezüglich eine weitere Suchstrategie in spezifischer Weise durchzuführen.

Dazu wird dann zunächst vorgesehen, dass das Relais 11 und das Relais 14 geschlossen bleiben, wohingegen das Relais 12 und das Relais 15 geöffnet werden. Durch diese Vorgehensweise kann über die Strommesselemente 22 und 23 detektiert werden, ob über dem Induktor 6a und dem Induktor 6c ein Zubereitungsgefäß angeordnet ist und die entsprechende Unterzone 61a bzw. 62a belegt ist.

In einem weiteren Suchschritt werden dann die Relais 11 und 14 geöffnet und die Relais 12 und 15 geschlossen. Abhängig von den dann ebenfalls wieder detektierten Stromwerten über die Strommesselemente 22 und 23 kann auch hier erkannt werden, ob sich Zubereitungsgefäße über den Unterzonen 61 b und 62b befinden.

Es kann selbstverständlich auch vorgesehen sein, dass zunächst die Relais 11 und 14 geöffnet werden und die Relais 12 und 15 geschlossen bleiben und im Nachfolgenden dann die Relais 11 und 14 geschlossen werden und die Relais 12 und 15 geöffnet werden.

Abhängig von diesen durchgeführten weiteren Suchschritten wird dann exakt festgestellt, auf welchen örtlich spezifischen Positionen der gesamten Kochzone 6 tatsächlich sich ein Zubereitungsgefäß befindet.

Nachfolgend wird dann nur derjenige Induktor 6a bis 6b durch Schließen des in Reihe dazu geschalteten Relais 11 bis 15 mit elektrischer Energie versorgt, dessen zugeordnete Unterzone 61 a, 61 b, 62a bzw. 62b auch explizit mit einem Zubereitungsgefäß belegt ist.

Die restlichen Induktoren, deren zugehörige Unterzone nicht belegt sind, sind bzw. bleiben deaktiviert.

Eine derartige Belegungserkennungsphase dauert im Ausführungsbeispiel etwa 5 Sekunden. Während dieser Zeitdauer können Zubereitungsgefäße 17 und 18 abgenommen oder aufgestellt werden, und dies wird dann auch erkannt. Ist eine Belegungserkennungsphase abgelaufen und entsprechend beendet, so wird im Weiteren eine zusätzliche Aufstellung eines Zubereitungsgefäßes auf die Kochzone 6 nicht detektiert und dieses weitere Zubereitungsgefäß wird dann auch nicht beheizt. Erst wenn der Nutzer aktiv das Bedienelement 25 betätigt, wird eine weitere Belegungserkennungsprüfung gestartet und dann das auch zusätzlich nach der ersten Belegungserkennungsphase aufgestellte Zubereitungsgefäß detektiert.

Des Weiteren ist noch zu erwähnen, dass ein während einer Belegungserkennungsphase detektiertes Zubereitungsgefäß auf der Kochzone 6 in diesem ersten Betriebsmodus nach Ablauf der Belegungserkennungsphase auf der Kochzone 6 verschoben (aber nicht abgenommen) werden kann und dieses Verschieben detektiert wird. Es werden dann diejenigen Induktoren 6a bis 6d aktiviert, die zum Erwärmen des Zubereitungsgefäßes an der neuen Stelle erforderlich sind, wobei diejenigen Induktoren 6a bis 6d, die im Vergleich zur ursprünglichen Position des Zubereitungsgefäßes vor der Verschiebung nunmehr nicht belegt sind, deaktiviert werden.

In der beispielhaften Darstellung gemäß Fig. 1 sind zwei Zubereitungsgefäße 17 und 18 dargestellt, die größenmäßig jeweils kleiner als eine Teilkochzone 61 bzw. 62 sind. Besonders vorteilhaft ist der erste Betriebsmodus des Kochfelds 1 dann, wenn ein Zubereitungsgefäß auf die Kochzone 6 gestellt wird, welches flächenmäßig größer als eine Teilkochzone 61 oder 62 ist. Denn genau dann wird dieser erste Betriebsmodus besonders vorteilhaft, da quasi im zweiten Betriebsmodus eine gesamte Aufheizung eines derartig großen Zubereitungsgefäßes nicht möglich ist.

Die beispielhaft gezeigten Unterzonen 61 a, 61 b, 62a und 62b sind im Ausführungsbeispiel flächenmäßig gleich groß und auch im Hinblick auf ihre Formgebung gleich. Es kann auch vorgesehen sein, dass zumindest eine Unterzone größer und/oder mit unterschiedlicher Formgebung ausgebildet ist. Dies hängt insbesondere auch von der Ausgestaltung und Größe des darunter angeordneten und zugeordneten Induktors 6a bis 6d ab.

Die vorab dargestellte Erläuterung des mehrstufigen Suchverfahrens kann bei dem in Fig. 2 gezeigten spezifischen Ausführungsbeispiel auch dahingehend durchgeführt werden, dass nach der prinzipiellen grundsätzlichen Erstdetektion eines Zubereitungsgefäßes irgendwo auf der Kochzone 6 die nachfolgenden Suchschritte in den Teilbereichen betreffend die Teilkochzone 61 und die Teilkochzone 62 nicht gleichzeitig, wie oben erläutert, sondern zeitversetzt erfolgen.

Im Hinblick auf die beispielhafte Darstellung in Fig. 1 ist das Relais 13 geöffnet, da auf der Unterzone 62a kein Zubereitungsgefäß aufgestellt ist. Die weiteren Unterzonen 61 a, 61 b und 62b sind mit den Zubereitungsgefäßen 17 und 18 belegt, so dass die zugeordneten darunter und somit unter der Kochfeldplatte bzw. Aufstellplatte 2 angeordneten Induktoren 6a, 6b und 6d mit Energie versorgt werden müssen, wozu die Relais 11, 12 und 15 geschlossen sind.

### Bezugszeichenliste

- 1: Kochfeld
- 2: Aufstellplatte
- 3: Oberseite
- 4, 5, 6: Kochzonen
- 41, 51: Konturen
- 6a, 6b, 6c, 6d: Induktoren
- 7: Schaltungsanordnung
- 8, 9: Treiberschaltungen
- 10, 13: Halbbrückenschaltungen
- 11, 12, 14, 15: Relais
- 16: Vorrichtung
- 17, 18: Zubereitungsgefäße
- 61: erste Teilkochzone
- 61 a, 61 b: Unterzonen
- 62: zweite Teilkochzone
- 62a, 62b: Unterzonen

## Patentansprüche

1. Verfahren zum Betreiben einer Kochzone (6) eines Kochfelds (1), bei welchem die Kochzone (6) aus zumindest zwei Teilkochzonen (61, 62) gebildet wird, und jede Teilkochzone (61, 62) durch zumindest eine Heizeinheit (6a bis 6d) heizbar ist, wobei die Heizeinheiten (6a bis 6d) überlappungsfrei nebeneinander angeordnet werden, derart, dass bei einem gemeinsamen Betrieb der Teilkochzonen (61, 62) eine zusammenhängende beheizbare Fläche ausgebildet wird, wobei in einem ersten Betriebsmodus, in dem die Teilkochzonen (61, 62) als gemeinsame Kochzone (6) betreibbar sind, eine Belegungserkennung einer Teilkochzone (61, 62) mit zumindest einem Zubereitungsgefäß (17, 18) durchgeführt werden kann, und alle aktivierten und mit einem Zubereitungsgefaß (17, 18) belegten Teilkochzonen (61, 62) nur mit der jeweils gleichen elektrischen Leistung gespeist werden können, wobei mit der Wahl des ersten Betriebsmodus eine erste Belegungserkennungsphase automatisch gestartet wird und nur die Teilkochzone (61, 62), auf der ein Zubereitungsgefäß (17, 18) detektiert wird, geheizt wird, und die Teilkochzonen (61, 62) in einem zweiten Betriebsmodus des Kochfelds (1) unabhängig voneinander als jeweils eigene Kochzone betrieben werden.

2. Verfahren nach Anspruch 1, **dadurch gekennzeichnet, dass** nach dem Ablauf der ersten Belegungserkennungsphase das Durchführen einer nachfolgenden weiteren Belegungserkennungsphase nur nutzerdefiniert gestartet werden kann.

3. Verfahren nach einem der vorhergehenden Ansprüche, **dadurch gekennzeichnet, dass** nach dem Ende einer Belegungserkennungsphase ein Aufstellen eines weiteren Zubereitungsgefaßes (17, 18) auf der Kochzone (6) im ersten Betriebsmodus unerkannt bleibt und die Teilkochzone (61, 62), auf der das weitere Zubereitungsgefäß (17, 18) aufgestellt wird, unbeheizt bleibt.

4. Verfahren nach einem der vorhergehenden Ansprüche, **dadurch gekennzeichnet, dass** während einer Belegungserkennungsphase das Abnehmen und Aufstellen von einem oder mehreren Zubereitungsgefäßen (17, 18) auf den Teilkochzonen (61, 62) der Kochzone (6) erkannt wird und die Teilkochzonen (61, 62), auf denen eine Belegung erkannt wird, beheizt werden.

5. Verfahren nach einem der vorhergehenden Ansprüche, **dadurch gekennzeichnet, dass** eine Belegungserkennungsphase kürzer als 10 Sekunden, insbesondere 5 Sekunden, dauert.

6. Verfahren nach einem der vorhergehenden Ansprüche, **dadurch gekennzeichnet, dass** zumindest in der ersten Belegungserkennungsphase, insbesondere in allen Belegungserkennungsphasen, alle Teilkochzonen (61, 62) im Hinblick auf eine Belegung überpruft werden

7. Verfahren nach einem der vorhergehenden Anspruche, **dadurch gekennzeichnet, dass** im ersten Betriebsmodus ein Verschieben eines wahrend einer Belegungserkennungsphase auf der Kochzone (6) detektiertes Zubereitungsgefaß (17, 18) auch nach Ablauf einer Belegungserkennungsphase erkannt und dann die Teilkochzonen (61, 62) beheizt werden, auf welche das Zubereitungsgefäß (17, 18) verschoben wird.

8. Verfahren nach einem der vorhergehenden Ansprüche, **dadurch gekennzeichnet, dass** der erste Betriebsmodus nur nutzerdefiniert gestartet werden kann.

9. Verfahren nach einem der Ansprüche 1 bis 6, **dadurch gekennzeichnet, dass** der erste Betriebsmodus beim Einschalten des Kochfelds automatisch gestartet wird.

10. Verfahren nach einem der vorhergehenden Ansprüche, **dadurch gekennzeichnet, dass** eine erste Teilkochzone (61, 62) durch zumindest zwei nebeneinander angeordnete Heizeinheiten (6a bis 6d) geheizt werden kann und die zwei Heizeinheiten (6a bis 6d) mit einer ersten Treiberschaltung (8, 9) mit elektrischer Energie versorgt werden können, und eine zweite Teilkochzone (61, 62) durch zumindest eine neben den zwei Heizeinheiten (6a bis 6d) der ersten Teilkochzone (61, 62) angeordneten dritte Heizeinheit (6a bis 6d) geheizt werden kann und die zumindest dritte Heizeinheit (6a bis 6d) mit einer separaten zweiten Treiberschaltung (8, 9) mit Energie versorgt werden kann.

## Claims

1. Method for operating a cooking zone (6) of a cooktop (1), in which the cooking zone (6) is formed from at least two cooking sub-zones (61, 62) and each cooking sub-zone (61, 62) is able to be heated by at least one heating unit (6a to 6d), wherein the heating units (6a to 6d) are disposed adjacent to one another without overlapping, such that a cohesive heatable surface is formed during joint operation of the cooking sub-zones (61, 62), wherein in a first operating mode, in which the cooking sub-zones (61, 62) can be operated as a joint cooking zone (6), detection of the occupancy of a cooking sub-zone (61, 62) by at least one food preparation vessel (17, 18) can be performed and all activated cooking sub-zones (61, 62) occupied by a food preparation vessel (17, 18) can only be supplied with the same electrical power in each instance, wherein with the selection of the first operating mode, a first occupancy detection phase is automatically started and only the cooking sub-zone (61, 62), on which a food preparation vessel (17, 18) is detected is heated and in a second operating mode of the cooktop (1) the cooking sub-zones (61, 62) are operated independently of one another as a separate cooking zone in each instance.

2. Method according to claim 1, **characterised in that** after the first occupancy detection phase has elapsed, the performance of a subsequent further occupancy detection phase can only be started in a user-defined manner.

3. Method according to one of the preceding claims, **characterised in that,** after the end of an occupancy detection phase, the placing of a further food preparation vessel (17, 18) on the cooking zone (6) remains undetected in the first operating mode and the cooking sub-zone (61, 62), on which the further food preparation vessel (17, 18) is placed remains unheated.

4. Method according to one of the preceding claims, **characterised in that** during an occupancy detection phase, the removal and placing of one or more food preparation vessels (17, 18) on the cooking sub-zones (61, 62) of the cooking zone (6) is detected and the cooking sub-zones (61, 62), on which occupancy is detected, are heated.

5. Method according to one of the preceding claims, **characterised in that** an occupancy detection phase lasts less than 10 seconds, particularly for 5 seconds.

6. Method according to one of the preceding claims, **characterised in that,** at least in the first occupancy detection phase, particularly in all occupancy detection phases, all cooking sub-zones (61, 62) are checked in respect of whether they are occupied or not.

7. Method according to one of the preceding claims, **characterised in that,** in the first operating mode, a displacement of a food preparation vessel (17, 18) detected during an occupancy detection phase on the cooking zone (6) is also detected after an occupancy detection phase has elapsed and the cooking sub-zones (61, 62), to which the food preparation vessel (17, 18) is displaced, are then heated.

8. Method according to one of the preceding claims, **characterised in that** the first operating mode can only be started in a user-defined manner.

9. Method according to one of claims 1 to 6, **characterised in that** the first operating mode is started automatically when the cooktop is switched on.

10. Method according to one of the preceding claims, **characterised in that** a first cooking sub-zone (61, 62) can be heated by at least two heating units (6a to 6d) disposed adjacent to one another and the two heating units (6a to 6d) can be supplied with electrical energy with a first driver circuit (8, 9), and a second cooking sub-zone (61, 62) can be heated by at least a third heating unit (6a to 6d) disposed adjacent to the two heating units (6a to 6d) of the first cooking sub-zone (61, 62) and the at least third heating unit (6a to 6d) can be supplied with energy with a separate second driver circuit (8, 9).

## Revendications

1. Procédé pour faire fonctionner une zone de cuisson (6) d'une plaque de cuisson (1), dans lequel la zone de cuisson (6) est formée par au moins deux zones de cuisson partielles (61, 62), chaque zone de cuisson partielle (61, 62) pouvant être chauffée par au moins une unité de chauffage (6a à 6d), lesdites unités de chauffage (6a à 6d) étant juxtaposées sans recouvrement, de telle sorte que lorsque les zones de cuisson partielles (61, 62) fonctionnent ensemble, il se forme une surface chauffante continue, dans lequel dans un premier mode de fonctionnement, dans lequel les zones de cuisson partielles (61, 62) peuvent fonctionner comme zone de cuisson commune (6), une reconnaissance d'occupation d'une zone de cuisson partielle (61, 62) par au moins un récipient de préparation (17, 18) peut être effectuée, et toutes les zones de cuisson partielles (61, 62) activées et occupées par un récipient de cuisson (17, 18) peuvent être alimentées uniquement avec la même puissance électrique, dans lequel, avec le choix du premier mode de fonctionnement, une première phase de reconnaissance d'occupation est lancée automatiquement et seule la zone de cuisson partielle (61, 62) sur laquelle un récipient de préparation (17, 18) est détecté, est chauffée et dans un deuxième mode de fonctionnement de la plaque de cuisson (1), les zones de cuisson partielles (61, 62) fonctionnent indépendamment l'une de l'autre, chacune comme zone de cuisson autonome.

2. Procédé selon la revendication 1, **caractérisé en ce qu'**après la première phase de reconnaissance d'occupation, le lancement de la mise en œuvre d'une autre phase de reconnaissance d'occupation suivante ne peut être défini que par l'utilisateur.

3. Procédé selon l'une des revendications précédentes, **caractérisé en ce qu'**après la fin d'une phase de reconnaissance d'occupation, la pose d'un autre récipient de préparation (17, 18) sur la zone de cuisson (6) reste non détectée dans le premier mode de fonctionnement et la zone de cuisson partielle (61, 62) sur laquelle l'autre récipient de préparation (17, 18) est posé, reste non chauffée.

4. Procédé selon l'une des revendications précédentes, **caractérisé en ce que** durant une phase de reconnaissance d'occupation, la pose et le retrait d'un ou plusieurs récipients de préparation (17, 18) sur les zones de cuisson partielles (61, 62) de la zone de cuisson (6) sont détectés et les zones de cuisson partielles (61, 62) sur lesquelles une occupation est détectée, sont chauffées.

5. Procédé selon l'une des revendications précédentes, **caractérisé en ce qu'**une phase de reconnaissance d'occupation dure moins de 10 secondes, notamment 5 secondes.

6. Procédé selon l'une des revendications précédentes, **caractérisé en ce qu'**au moins dans la première phase de reconnaissance d'occupation, en particulier dans toutes les phases de reconnaissance d'occupation, toutes les zones de cuisson partielles (61, 62) sont vérifiées quant à leur occupation.

7. Procédé selon l'une des revendications précédentes, **caractérisé en ce que** dans le premier mode de fonctionnement, un déplacement d'un récipient de préparation (17, 18) détecté sur la zone de cuisson (6) durant une phase de reconnaissance d'occupation est reconnu aussi après une phase de reconnaissance d'occupation et les zones de cuisson partielles (61, 62) sur lesquelles le récipient de préparation (17, 18) est déplacé, sont alors chauffées.

8. Procédé selon l'une des revendications précédentes, **caractérisé en ce que** le lancement du premier mode de fonctionnement ne peut être défini que par l'utilisateur.

9. Procédé selon l'une des revendications 1 à 6, **caractérisé en ce que** le premier mode de fonctionnement est lancé automatiquement à la mise en marche de la plaque de cuisson.

10. Procédé selon l'une des revendications précédentes, **caractérisé en ce qu'**une première zone de cuisson partielle (61, 62) peut être chauffée par au moins deux unités de chauffage (6a à 6d) juxtaposées, lesdites deux unités de chauffage (6a à 6d) pouvant être alimentées en énergie électrique par un premier circuit excitateur (8, 9), et une deuxième zone de cuisson partielle (61, 62) peut être chauffée par au moins une troisième unité de chauffage (6a à 6d) placée à côté desdites deux unités de chauffage (6a à 6d) de la première zone de cuisson partielle (61, 62), ladite au moins troisième unité de chauffage (6a à 6d) pouvant être alimentée en énergie par un deuxième circuit excitateur (8, 9) séparé.
